# EUROPEAN PATENT APPLICATION

(11) **EP 4 852 393 A1**
(43) Date of publication of application: **09.12.2026**
(21) Application number: 24923328.9
(22) Date of filing: 24.09.2024
(51) Int. Cl.: H04L 45/302

(54) **SERVICE PATH ESTABLISHMENT METHOD, DEVICE, AND STORAGE MEDIUM**

(30) Priority: 08.02.2024 CN 202410178120
(71) Applicant: ZTE CORPORATION, Shenzhen, Guangdong 518057 (CN)
(72) Inventor: NIU, Xiaobing, Shenzhen, Guangdong 518057 (CN); WEN, Jianzhong, Shenzhen, Guangdong 518057 (CN); ZHOU, Jin, Shenzhen, Guangdong 518057 (CN); BO, Kaitao, Shenzhen, Guangdong 518057 (CN)
(74) Representative: Carangelo, Pierluigi
(86) International application number: PCT/CN2024/120710
(87) International publication number: WO 2025/167123

(57) **Abstract**

Provided in the embodiments of the present application are a service path establishment method, an electronic device, and a computer-readable storage medium. The method comprises: a first node receiving a first message sent by a second node, wherein the first message carries path information and a Metric object, and the Metric object carries a path delay Metric value; and the first node performing path configuration on the basis of the path information and the path delay Metric value.

## Description

### CROSS-REFERENCE TO RELATED APPLICATION

This application claims priority to Chinese Patent Application No. 202410178120.4, filed with the China Patent Office on February 8, 2024 and entitled "SERVICE PATH ESTABLISHMENT METHOD, DEVICE, AND STORAGE MEDIUM", the entire content of which is incorporated herein by reference.

### TECHNICAL FIELD

The present application relates to the field of communication technologies, and in particular, to a service path establishment method, an electronic device, and a computer-readable storage medium.

### BACKGROUND

At present, some client-layer service signals borne over a transport network have explicit requirements on transmission delay. For example, when a signal of a power protection relay system is borne over a transport network, in order to ensure normal switching of the power protection relay system (for example, initiating differential protection), it is explicitly required that the forward path delay and the reverse path delay of the transmitted signal, as well as the bidirectional path delay difference, cannot exceed corresponding delay upper limits. Specifically, in some scenarios, it is required that the forward path delay does not exceed 15 milliseconds, the reverse path delay also does not exceed 15 milliseconds, and the bidirectional path delay difference does not exceed 200 microseconds.

How to support transfer of a delay parameter in a message so as to support creation of such precise-time-control services is a technical problem to be addressed.

### SUMMARY

In accordance with a first aspect of the present application, an embodiment provides a service path establishment method, applied to a first node, the method including: receiving a first message sent by a second node, where the first message carries path information and a Metric object, and the Metric object carries a path delay Metric value; and performing path configuration according to the path information and the path delay Metric value.

In accordance with a second aspect of the present application, an embodiment provides a service path establishment method, applied to a second node, the method including: sending a first message to a first node, where the first message carries path information and a Metric object, and the Metric object carries a path delay Metric value, so that the first node performs path configuration according to the path information and the path delay Metric value.

In accordance with a third aspect of the present application, an embodiment provides an electronic device, including: one or more processors; and a memory storing one or more programs which, when executed by the one or more processors, cause the one or more processors to perform the service path establishment method according to the first aspect above or the service path establishment method according to the second aspect above.

In accordance with a fourth aspect of the present application, an embodiment provides a computer-readable storage medium storing a computer program which, when executed by a processor, causes the processor to perform the service path establishment method according to the first aspect above or the service path establishment method according to the second aspect above.

### BRIEF DESCRIPTION OF DRAWINGS

The accompanying drawings are provided for a further understanding of the technical solutions of the present application and constitute a part of the specification. Together with the embodiments of the present application, the drawings are used to explain the technical solutions of the present application, and do not constitute a limitation on the technical solutions of the present application.
FIG. 1 is a schematic diagram of a hierarchical architecture of an SDN controller according to an embodiment of the present application;
FIG. 2 is a schematic diagram of a PCEP network architecture according to an embodiment of the present application;
FIG. 3 is a schematic flowchart of a service path establishment method according to an embodiment of the present application;
FIG. 4 is a schematic diagram of a format of a Metric object according to an embodiment of the present application;
FIG. 5a is a schematic diagram of a format of a Metric object according to an embodiment of the present application;
FIG. 5b is a schematic diagram of a format of a Metric object according to an embodiment of the present application;
FIG. 5c is a schematic diagram of a format of a Metric object according to an embodiment of the present application;
FIG. 6 is a schematic flowchart of a service path establishment method according to an embodiment of the present application;
FIG. 7 is a schematic flowchart of a service path establishment method according to an embodiment of the present application;
FIG. 8 is a schematic flowchart of a service path establishment method according to an embodiment of the present application;
FIG. 9 is a schematic diagram of an electronic device according to an embodiment of the present application.

### DETAILED DESCRIPTION

In order to enable those skilled in the art to better understand the technical solutions of the present application, the technical solutions provided by the present application are described in detail below with reference to the accompanying drawings.

Example embodiments will be described more fully below with reference to the accompanying drawings, but the described example embodiments may be embodied in different forms and should not be construed as limited to the embodiments set forth herein. Rather, these embodiments are provided so that the present application will be thorough and complete, and will fully convey the scope of the present application to those skilled in the art.

As used herein, the term "and/or" includes any and all combinations of one or more of the associated listed items.

The terminology used herein is only for the purpose of describing particular embodiments and is not intended to limit the present application. As used herein, the singular forms "a", "an" and "the" are also intended to include the plural forms, unless the context clearly indicates otherwise. It will be further understood that when the terms "include" and/or "made of" are used in this specification, they specify the presence of features, integers, steps, operations, elements and/or components, but do not preclude the presence or addition of one or more other features, integers, steps, operations, elements, components and/or groups thereof.

In the following description, reference is made to "some embodiments", which describe a subset of all possible embodiments. However, it will be understood that "some embodiments" may be the same subset or different subsets of all possible embodiments, and may be combined with each other without conflict.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and of the present application, and will not be interpreted in an idealized or overly formal sense, unless expressly so defined in the embodiments of the present application.

To facilitate a better understanding of the solutions of the embodiments of the present application, the terms involved in the present application are first introduced below.

Management and control system: Management Control Continuum (MCC) integrates management functions and control functions that are essentially the same, so as to achieve unified management and control of transport resources and provide integrated management and control services for upper-layer users. A Software Defined Network (SDN) controller, an Element Management System (EMS), a Network Management System (NMS), a control plane and the like are all instances of the management and control system. Functional modules in the management and control system provide functional services through interfaces. Scheduling of connections is a basic function of the management and control system.

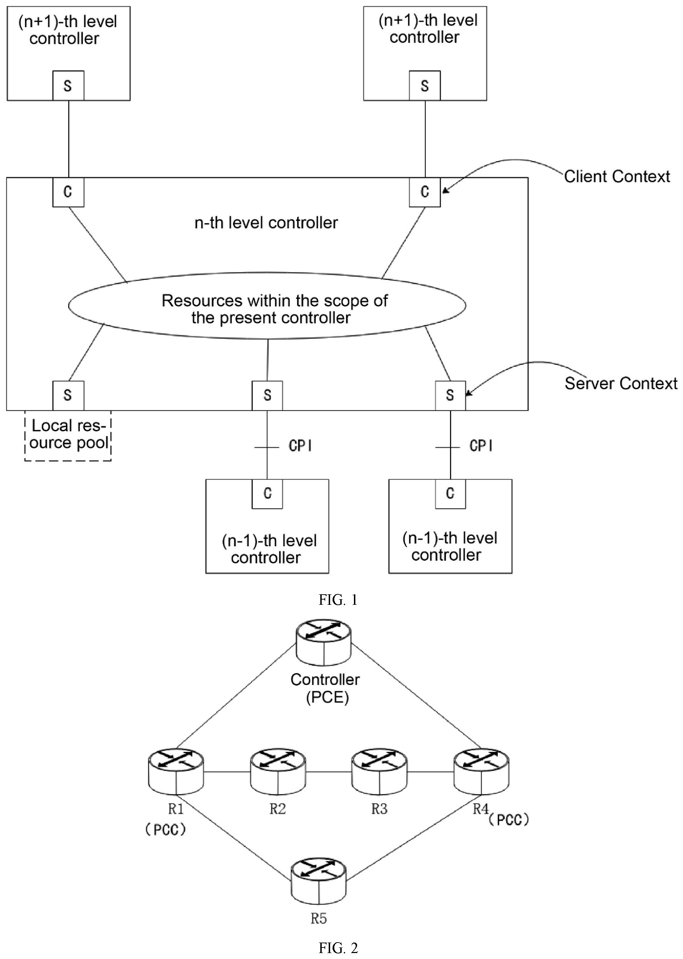

Referring to FIG. 1, FIG. 1 is a schematic diagram of a hierarchical architecture of an SDN controller according to an embodiment of the present application. In the hierarchical architecture of the SDN Controller, as shown in FIG. 1, a client-layer and server-layer relationship is formed between an upper-layer Controller and a lower-layer Controller. A client-layer Controller and a server-layer Controller interact with each other through a Server Context and a Client Context. Each Controller may create a plurality of Client Contexts, at least one Server Context and one Administrative Context. The Administrative Context provides support information for an administrator to manage and control the controller, and performs an administrator role within the controller, including maintaining life cycles of the Client Context and the Server Context, and the like.

The Path Computation Element Communication Protocol (PCEP) solves the above problem by performing centralized control on the path computation function within a network, whereby a computation element separately completes the computation of Multi-Protocol Label Switching (MPLS) paths and Segment Routing IPv6 (SRv6) paths based on the IPv6 forwarding plane. The core idea of such centralized computation in PCEP matches SDN technology very well. Therefore, PCEP also serves as a solution for migrating an MPLS network to an SDN network.

A typical PCEP network includes the following parts:
Path Computation Element (PCE): an entity in a network, configured to provide a path computation service for devices on the network, which can perform intra-area path computation, and can also compute a complete LSP path in a complex network environment.
Path Computation Client (PCC): requests a PCE to perform path computation, and establishes an LSP according to path information returned by the PCE.

PCEP session: a session established between a PCC and a PCE, or between a PCE and a PCE. In a stateful PCEP session, a PCC can report information about all LSPs in a network to a PCE; in addition to providing a path computation service, the PCE can also create, delete and optimize LSPs within a domain, so as to allocate and use network resources to the greatest extent.

A PCC and a PCE exchange PCEP messages to complete session establishment, maintenance, path computation and updating, and the like. A PCEP message consists of a PCEP packet header and a message body of variable length, and the message body consists of one or more objects. The main content of a PCEP message is carried by different objects.

PCEP messages include the following categories:
Open message: used to start a PCEP session.
Keepalive message: a keepalive message for a PCEP session.
PCReq (Path Computation Request) message: a message sent by a PCC to a PCE to request path computation.
PCRep (Path Computation Reply) message: a path computation reply message sent by a PCE to a PCC.
PCNtf (Path Computation Notification) message: an event notification message sent by a PCC to a PCE or by a PCE to a PCC.
PCErr (Path Computation Error) message: an error notification message sent by a PCC to a PCE or by a PCE to a PCC.
Close message: a message used to close a PCEP session.
PCRpt (Path Computation State Report) message: a message sent by a PCC to a PCE for reporting the current state of an LSP.
PCUpd (Path Computation Update Request) message: a PCEP message sent by a PCE to a PCC for updating LSP information.
PCInitiate (Path Computation Initiate Request) message: a PCEP message sent by a PCE to a PCC for creating an LSP.

Referring to FIG. 2, FIG. 2 is a schematic diagram of a PCEP network architecture according to an embodiment of the present application. The PCEP network shown in FIG. 2 includes network nodes R1, R2, R3, R4 and R5, and further includes a controller. Assuming that a service connection currently needs to be established between R1 and R4, the head node R1 sends a path computation request message to the controller through a PCEP session; the controller computes, based on a constraint-based path first algorithm, a path that reaches the destination node R4 and meets constraint conditions, and after the path is successfully computed, returns a path computation reply message to R1 through the PCEP session; after receiving the path computation reply message, R1 establishes an LSP path according to the reply message. For a bidirectional service, the tail node R4 can likewise send a path computation request message to the controller through a PCEP session; the controller computes, based on a constraint-based path first algorithm, a path that reaches the destination node R1 and meets constraint conditions, and after the path is successfully computed, returns a path computation reply message to R4 through the PCEP session; after receiving the path computation reply message, R4 establishes an LSP path according to the reply message. Here, both R1 and R4 may be referred to as PCCs, and the controller may be referred to as a PCE. In addition, for ease of description, the path in the direction from R1 to R4 may be referred to as a forward path, and the path in the direction from R4 to R1 may be referred to as a reverse path; R1 may also be referred to as an A end, and R4 may also be referred to as a Z end.

The network node described in the embodiments of the present application may be a physical node or a logical node. A physical node is a network device such as a switch or a router. A logical node is a functional module in a network device; for example, a logical node is a virtual switch, a virtual router or the like deployed in a network device.

At present, some client-layer service signals borne over a transport network have explicit requirements on transmission delay. For example, when a signal of a power protection relay system is borne over a transport network, in order to ensure normal switching of the power protection relay system (for example, initiating differential protection), it is explicitly required that the forward path delay and the reverse path delay of the transmitted signal, as well as the bidirectional path delay difference, cannot exceed corresponding delay upper limits. Specifically, in some scenarios, it is required that the forward path delay does not exceed 15 milliseconds, the reverse path delay also does not exceed 15 milliseconds, and the bidirectional path delay difference does not exceed 200 microseconds. How to support transfer of a delay parameter in a message so as to support creation of such precise-time-control services is a technical problem to be solved.

In view of this, embodiments of the present application provide a service path establishment method, an electronic device and a computer-readable storage medium, which can enable a message to support the carrying of path delay information, so as to configure a service path according to the path delay information.

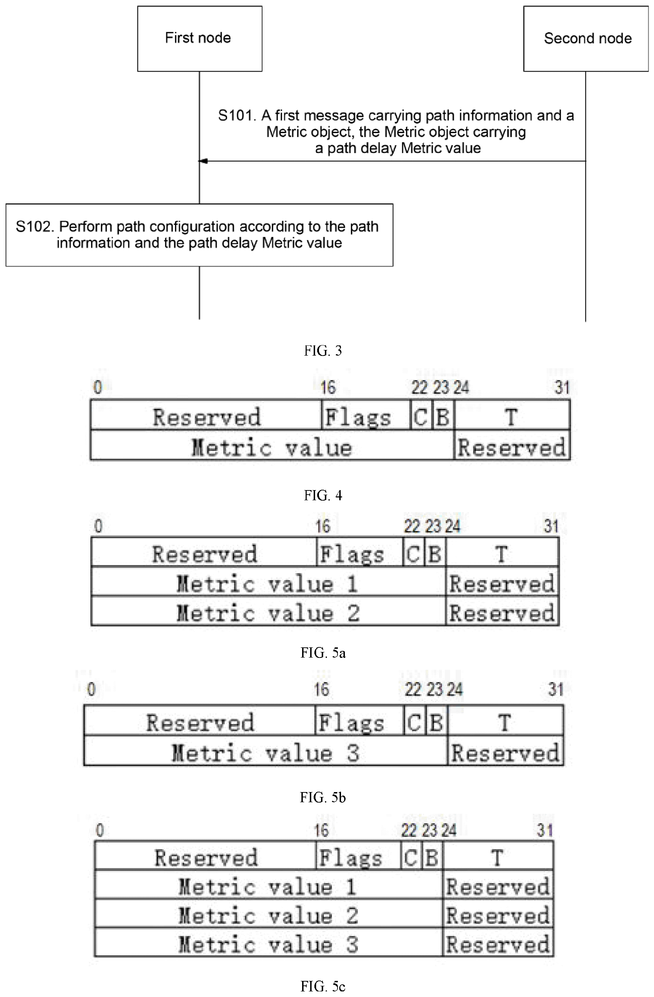

Referring to FIG. 3, FIG. 3 is a schematic flowchart of a service path establishment method according to an embodiment of the present application, which is applied to a first node. As shown in FIG. 3, the method includes the following steps S101 and S102:
In step S101, a first message sent by a second node is received, where the first message carries path information and a Metric object, and the Metric object carries a path delay Metric value.
In step S102, path configuration is performed according to the path information and the path delay Metric value.

Referring to FIG. 4, FIG. 4 is a schematic diagram of a format of a Metric object according to an embodiment of the present application. As shown in FIG. 4, the Metric object includes the following fields:
Reserved: a reserved field, which is currently undefined and is entirely filled with 0s in a packet;
Flags: flag bits;
C: a C flag, representing a Computed Metric;
B: a B flag, representing a Bound;
T: a T flag, which indicates a metric type through its value;
Metric Value: a metric value.

In an embodiment of the present application, the Metric value in the Metric object may include one or more path delay Metric values.

Specifically, the path delay Metric value carried by the Metric object includes at least one of the following:
a first Metric value, configured to indicate a forward path delay;
a second Metric value, configured to indicate a reverse path delay;
a third Metric value, configured to indicate a bidirectional path delay difference.

Referring to FIG. 5a, FIG. 5a is a schematic diagram of a format of a Metric object according to an embodiment of the present application. As shown in FIG. 5a, the Metric object carries Metric Value 1 and Metric Value 2, where Metric Value 1 represents a forward path delay, and Metric Value 2 represents a reverse path delay.

Referring to FIG. 5b, FIG. 5b is a schematic diagram of a format of a Metric object according to an embodiment of the present application. As shown in FIG. 5b, the Metric object carries Metric Value 3, and this Metric Value 3 represents a bidirectional path delay difference.

Referring to FIG. 5c, FIG. 5c is a schematic diagram of a format of a Metric object according to an embodiment of the present application. As shown in FIG. 5c, the Metric object carries Metric Value 1, Metric Value 2 and Metric Value 3, where Metric Value 1 represents a forward path delay, Metric Value 2 represents a reverse path delay, and Metric Value 3 represents a bidirectional path delay difference.

In an embodiment of the present application, the Metric object includes a T flag, and the T flag may be used to represent the type of the path delay Metric value carried by the Metric object.

Currently, the T flag defined in the Metric object may be used to represent the following metric types: IGP metric, TE metric, hop count, path delay, variable path delay, path loss, and the like. In an embodiment of the present application, in order to represent, through the T flag, the type of the path delay Metric value carried by the Metric object, the definition of the T flag in the Metric object is further extended, so that the T flag can further be used to represent the following metric types: forward path delay, reverse path delay, bidirectional path delay difference, forward path delay + reverse path delay, and forward path delay + reverse path delay + bidirectional path delay difference.

For example, in the example of the Metric object shown in FIG. 5a, the value of the T flag is X0, indicating that the Metric object contains two path delay Metric values, which respectively indicate a forward path delay and a reverse path delay; in the example of the Metric object shown in FIG. 5b, the value of the T flag is X1, indicating that the Metric object contains one path delay Metric value, which indicates a bidirectional path delay difference; in the example of the Metric object shown in FIG. 5c, the value of the T flag is X2, indicating that the Metric object contains three path delay Metric values, which respectively indicate a forward path delay, a reverse path delay and a bidirectional path delay difference. Here, the values of X0, X1 and X2 are not equal to one another.

In an embodiment of the present application, the forward path delay represents the accumulated delay of all links traversed by the forward path. For example, if the nodes traversed by the current forward path are R1, R2, R3 and R4, the forward path delay includes the accumulated delay value of the link segment from R1 to R2, the link segment from R2 to R3 and the link segment from R3 to R4.

The forward path delay may also represent the accumulated delay of all links and all nodes traversed by the forward path. For example, if the nodes traversed by the current forward path are R1, R2, R3 and R4, the forward path delay includes the accumulated delay value of the link segment from R1 to R2, the link segment from R2 to R3 and the link segment from R3 to R4, and further includes the accumulated delay value of the nodes R1, R2, R3 and R4.

In an embodiment of the present application, the reverse path delay represents the accumulated delay of all links traversed by the reverse path. For example, if the nodes traversed by the current reverse path are R4, R5 and R1, the reverse path delay includes the accumulated delay value of the link segment from R4 to R5 and the link segment from R5 to R1.

The reverse path delay may also represent the accumulated delay of all links and all nodes traversed by the reverse path. For example, if the nodes traversed by the current reverse path are R4, R5 and R1, the reverse path delay includes the accumulated delay value of the link segment from R4 to R5 and the link segment from R5 to R1, and further includes the accumulated delay value of the nodes R4, R5 and R1.

In an embodiment of the present application, the bidirectional path delay difference represents the difference between the forward path delay and the reverse path delay, or represents the absolute difference between the forward path delay and the reverse path delay.

In an embodiment of the present application, the Metric object carried by the first message may include an intended attribute Metric object for carrying an expected path delay Metric value.

Illustratively, the first message includes an intended attribute object, and the intended attribute object includes one or more sub-objects, one of which is an intended attribute Metric object. The intended attribute Metric object contains a Metric list <Metric list>, and the Metric list contains a Metric value for representing an expected path delay. Specifically, the Metric list of the intended attribute Metric object may include at least one of the following path delay Metric values:
a first expected Metric value, configured to indicate an expected forward path delay;
a second expected Metric value, configured to indicate an expected reverse path delay;
a third expected Metric value, configured to indicate an expected bidirectional path delay difference.

In a possible embodiment of the present application, the first node is a PCC, the second node is a PCE, and the first message is a PCInitiate message. Illustratively, the PCE, which knows the delay metric values expected for an LSP, delivers to the PCC a PCInitiate message carrying an intended attribute Metric object. After receiving the PCInitiate message delivered by the PCE, the PCC performs path configuration and creates an LSP that satisfies the path delay Metric value in the intended attribute Metric object.

In a possible embodiment of the present application, the first node is a PCC, the second node is a PCE, and the first message is a PCUpd message. Illustratively, a change in the network topology or the like causes the PCE to recompute a path, and the PCE delivers the recomputed path information to the PCC through a PCUpd message, where the PCUpd message further carries expected path delay information of the LSP to be created (that is, an intended attribute Metric object). After receiving the PCUpd message delivered by the PCE, the PCC performs path configuration and creates an LSP that satisfies the path delay Metric value in the intended attribute Metric object.

In an embodiment of the present application, after receiving the first message sent by the second node, the first node may complete path configuration through RSVP-TE distributed signaling, or may complete path configuration through SRv6.

In an embodiment of the present application, performing path configuration according to the path information and the path delay Metric value may specifically include the following steps:
In step S201, a third message is sent downstream according to the path information, where the third message is a Path message.
In step S202, a fourth message sent from downstream according to the third message is received, so as to complete path configuration according to the fourth message, where the fourth message is a resource reservation Resv message.

Illustratively, after receiving the first message delivered by the PCE, the head node in the network generates a Path message carrying label request information, and the Path message is sent hop by hop to downstream nodes along the path computed by the PCE; after receiving the Path message, the tail node in the path generates a Resv message carrying reservation information and a label, and the Resv message is returned hop by hop to the head node along the reverse of the path over which the Path message was sent, and meanwhile the Resv message performs resource reservation on the nodes along the way; when the head node receives the Resv message, the LSP path is successfully established.

In an embodiment of the present application, after the fourth message sent from downstream according to the third message is received, the following step may further be included: sending, to the second node, a fifth message carrying the Metric object, where the fifth message is a path state report PCRpt message.

Illustratively, after the LSP path is successfully created, the head node returns a PCRpt message to the PCE to report the state of the created LSP. The PCRpt message may carry a Metric object.

In an embodiment of the present application, the Metric object carried by the fifth message includes an intended attribute Metric object and an actual attribute Metric object; the intended attribute Metric object is used to carry an expected path delay Metric value, and the actual attribute Metric object is used to carry an actual path delay Metric value.

Illustratively, the fifth message includes an intended attribute object and an actual attribute object.

Illustratively, the intended attribute object in the fifth message includes one or more sub-objects, one of which is an intended attribute Metric object. The intended attribute Metric object contains a Metric list <Metric list>, and the Metric values in the Metric list are used to represent expected path delay Metric values. Specifically, the Metric list of the intended attribute Metric object may include at least one of the following path delay Metric values:
a first expected Metric value, configured to indicate an expected forward path delay;
a second expected Metric value, configured to indicate an expected reverse path delay;
a third expected Metric value, configured to indicate an expected bidirectional path delay difference.

Illustratively, the actual attribute object in the fifth message includes one or more sub-objects, one of which is an actual attribute Metric object. The actual attribute Metric object contains a Metric list <Metric list>, and the Metric values in the Metric list are used to represent actual path delay Metric values. Specifically, the Metric list of the actual attribute Metric object may include at least one of the following path delay Metric values:
a first actual Metric value, configured to indicate an actual forward path delay;
a second actual Metric value, configured to indicate an actual reverse path delay;
a third actual Metric value, configured to indicate an actual bidirectional path delay difference.

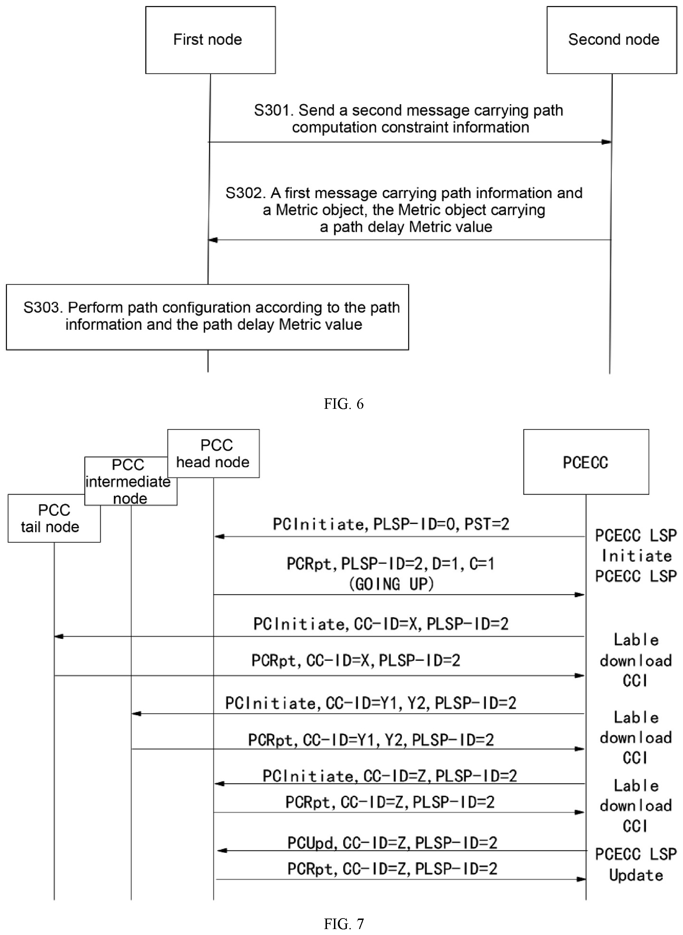

Referring to FIG. 6, FIG. 6 is a schematic flowchart of a service path establishment method according to an embodiment of the present application, which is applied to a first node. As shown in FIG. 6, the method includes the following steps S301 to S303:
In step S301, a second message carrying path computation constraint information is sent to a second node, so that the second node determines path information according to the path computation constraint information, where the path computation constraint information includes a Metric object.
In step S302, a first message sent by the second node is received, where the first message carries the path information and the Metric object, and the Metric object carries a path delay Metric value.
In step S303, path configuration is performed according to the path information and the path delay Metric value.

In a possible embodiment of the present application, the first node is a PCC, the second node is a PCE, the second message is a path computation request PCReq message, and the first message is a path computation reply PCRep message. The PCC sends a PCReq message requesting path computation to the PCE, and the PCReq message carries constraint condition information; the PCE receives the PCReq message sent by the PCC, computes a path that meets the constraint conditions, and sends the computed path information to the PCC through a PCRep message, so as to reply to the path computation request of the PCC.

In an embodiment of the present application, the PCReq message carries a Metric object, and the PCE determines the delay requirement of the path according to the Metric value in the Metric object, and then computes a path that satisfies the delay requirement. For example, if the PCReq message carries two Metric values respectively representing a forward path delay and a reverse path delay, the PCE needs to compute a forward path and a reverse path that correspondingly satisfy the forward path delay and the reverse path delay; for another example, if the PCReq message further carries a Metric value representing a bidirectional path delay difference, the forward path and the reverse path computed by the PCE should further satisfy the above bidirectional path delay difference.

In an embodiment of the present application, the path computation constraint information further includes at least one of the following:
a request parameter RP object, the RP object carrying a first B flag, and the first B flag being used to indicate whether the path to be computed is bidirectional;
an endpoint END-POINTS object, the END-POINTS object carrying a source address and a destination address of the path to be computed;
a Bandwidth object, the bandwidth object carrying a bandwidth of the path to be computed.

Illustratively, the PCReq message sent by the PCC to the PCE carries an RP object, an END-POINTS object, a bandwidth object and a Metric object. The value of the B flag in the RP object is 1, indicating that the path to be computed is a bidirectional path; the END-POINTS object carries the source address and the destination address of the path to be computed, that is, the address information of the two end nodes in the bidirectional path (hereinafter referred to as the A end and the Z end); the bandwidth object indicates the bandwidth requirement of the path to be computed, for example, indicating a bandwidth of OTN ODUk, MTNP 5G, fgMTNP 10 Mbps or fgOTN 10 Mbps granularity; the Metric object indicates the delay requirement of the path to be computed. The PCE computes, according to the constraint conditions carried by the PCReq message, a bidirectional path that satisfies requirements such as the source node, the destination node, the bandwidth and the delay.

In an embodiment of the present application, the Metric object further carries a second B flag and a C flag, where the second B flag represents a bound flag, and the C flag represents a computed metric flag. Both the second B flag and the C flag in the Metric object carried by the second message are set to 1, so that the first message sent by the second node carries the Metric object.

Illustratively, the PCReq message sent by the PCC to the PCE carries a Metric object, and both the B flag and the C flag of this Metric object are set to 1, so that the PCRep message returned by the PCE to the PCC also carries a Metric object.

In a possible embodiment of the present application, the first node is a PCC, and the second node is a Path Computation Element Central Controller (PCECC). The PCC initiates, through the second message, a path computation request carrying a path delay Metric value to the PCECC, and the PCECC returns, through the first message, path information and a path delay Metric value to the PCC, where the path indicated by the path information satisfies the requirement of the path delay Metric value, that is, does not exceed the upper limit indicated by the path delay Metric value.

In a possible embodiment of the present application, the first node is a network node, and the second node is a software defined network SDN controller. The network node sends, through the second message, a path computation request carrying a path delay Metric value to the SDN controller, and the SDN controller returns, through the first message, path information and a path delay Metric value to the network node, where the path indicated by the path information satisfies the requirement of the path delay Metric value, that is, does not exceed the upper limit indicated by the path delay Metric value.

In a possible embodiment of the present application, the first node is a first SDN controller, and the second node is a second SDN controller. The first SDN controller (which may also be referred to as an upper-layer controller) sends, through the second message, a path computation request carrying a path delay Metric value to the second SDN controller (which may also be referred to as a lower-layer controller); after receiving the path computation request, the second SDN controller performs path computation using a Routing Controller (RC) deployed locally, and returns the computed path information to the first SDN controller through the first message, where the first message further carries a path delay Metric value.

In other possible embodiments of the present application, it is also possible that the first node is a PCE and the second node is a PCC; or the first node is a PCECC and the second node is a PCC.

In the embodiments of the present application, the first node initiates a path computation request to the second node through the second message, and the first message carries forward path delay information, reverse path delay information and bidirectional path delay difference information; the second node performs path computation based on the constraint conditions given by the second message, and returns the path computation result (that is, the path information) to the first unit through the first message.

The first node and the second node may correspond to a network node and an SDN controller, or may correspond to an SDN controller and an SDN controller, or may correspond to a PCC and a PCE, or may correspond to a PCE and a PCC, or may correspond to a PCC and a PCECC, or may correspond to a PCECC and a PCC.

It is worth noting that, in the embodiments of the present application, the forward delay, the reverse delay and the forward-and-reverse delay difference of a path may be configured manually, or may be obtained through measurement by a network device, such as a link delay measured based on the Precise Time Protocol (PTP). PTP can achieve time synchronization accuracy at the sub-microsecond to nanosecond level between devices. PTP is a master-slave synchronization system, which uses a master-slave clock scheme, encodes time information, and utilizes the symmetry of the network and delay measurement technology to achieve time synchronization between the master and the slave. From several timestamps obtained by a slave clock through message exchange, the delay of the path can be computed: Delay = [(t2 - t1) + (t4 - t3)] / 2, where t1, t2, t3 and t4 respectively represent the start timestamp and the end timestamp in the forward direction of the link, and the start timestamp and the end timestamp in the reverse direction.

Illustratively, the delays within each link and each node traversed by the LSP may be accumulated to obtain a forward/reverse path delay value; when the delay value does not exceed the upper limit constrained in the forward/reverse path delay Metric value, and the difference between the forward path delay and the reverse delay does not exceed the upper limit constrained in the bidirectional path delay difference Metric value, it indicates that the route meets the forward and reverse delay constraints.

Illustratively, the delay within a node may include an egress queue delay and a timeslot cross-connect configuration delay.

It is worth noting that, in the embodiments of the present application, the forward delay, the reverse delay and the forward-and-reverse delay difference value of a node may be configured manually, or may be obtained through measurement by a network device. For example, in a Metro Transport Network (MTN) device, a smaller node delay can be obtained by optimizing the timeslot configuration.

When the PCE replies to the PCC, if the path computation is successful, the PCRep message carries the delay Metric Value corresponding to the computed path, and the B flag bit in the Metric object must be set to 1, while the C flag bit is meaningless. The format of the path delay Metric object returned in the PCRep message may be any one of the formats in the examples of FIG. 5a to FIG. 5c, but it is required that the Metric formats used in the PCReq and the PCRep be the same.

When the forward and reverse path delays computed by the PCE cannot satisfy the expected forward delay value, reverse delay value or bidirectional path delay difference, an attempt is made to compensate for part of the delay through buffering at the head node and/or the tail node. Specifically, if the forward delay value is relatively small while the reverse delay value is relatively large, the delay of the forward path is increased by increasing the buffering capability in the egress direction of the tail node (the Z end) of the forward path, thereby reducing the bidirectional path delay difference; if the forward delay value is relatively large while the reverse delay value is relatively small, the delay of the reverse path is increased by increasing the buffering capability in the egress direction of the reverse path at the head node (the A end) of the forward path, thereby reducing the bidirectional path delay difference.

Through the above method, by carrying the forward and reverse delays and the delay difference in the request initiated by the PCC, a path that meets the delay constraints can be computed, which provides a guarantee for some services that require precise control of the LSP delay.

An embodiment of the present application further provides a schematic flowchart of a service path establishment method, which is applied to a second node and includes the following step:
In step S401, a first message is sent to a first node, where the first message carries path information and a Metric object, and the Metric object carries a path delay Metric value, so that the first node performs path configuration according to the path information and the path delay Metric value.

The path delay Metric value carried by the Metric object includes at least one of the following:
a first Metric value, configured to indicate a forward path delay;
a second Metric value, configured to indicate a reverse path delay;
a third Metric value, configured to indicate a bidirectional path delay difference.

In an embodiment of the present application, the forward path delay represents the accumulated delay of all links traversed by the forward path, or represents the accumulated delay of all links and all nodes traversed by the forward path.

The reverse path delay represents the accumulated delay of all links traversed by the reverse path, or represents the accumulated delay of all links and all nodes traversed by the reverse path.

In an embodiment of the present application, the bidirectional path delay difference (which may also be referred to as a forward-and-reverse path delay difference) represents the difference or the absolute difference between the forward path delay and the reverse path delay.

In an embodiment of the present application, the Metric object further includes a T flag, and the T flag is used to represent the type of the path delay Metric value carried by the Metric object.

An embodiment of the present application further provides a schematic flowchart of a service path establishment method, which is applied to a second node and includes the following steps:
In step S501, a second message that is sent by a first node and carries path computation constraint information is received, where the path computation constraint information includes a path delay Metric value carried by a Metric object.
In step S502, path information is determined according to the path computation constraint information in the second message.
In step S503, a first message is sent to the first node, where the first message carries the path information and the Metric object, and the Metric object carries the path delay Metric value, so that the first node performs path configuration according to the path information and the path delay Metric value.

In an embodiment of the present application, the first message is a path computation reply PCRep message, and the second message is a path computation request PCReq message.

In an embodiment of the present application, the path computation constraint information further includes at least one of the following:
a request parameter RP object, the RP object carrying a first B flag, and the first B flag being used to indicate whether the path to be computed is bidirectional;
an endpoint END-POINTS object, the END-POINTS object carrying a source address and a destination address of the path to be computed;
a bandwidth object, the bandwidth object being used to carry a bandwidth of the path to be computed.

In an embodiment of the present application, the Metric object further carries a second B flag and a C flag, where the second B flag represents a bound flag, and the C flag represents a computed metric flag;
Both the B flag and the C flag in the Metric object carried by the second message are set to 1, so as to indicate that the first message needs to carry the Metric object.

In an embodiment of the present application, the first message is a path initiation request PCInitiate message, or the first message is a path update request PCUpd message.

In an embodiment of the present application, after the first message is sent to the first node, the method further includes: receiving a fifth message that is sent by the first node and carries the Metric object.

Illustratively, the fifth message may be a path state report PCRpt message.

In an embodiment of the present application, the Metric object carried by the fifth message includes an intended attribute Metric object and an actual attribute Metric object; the intended attribute Metric object is used to carry an expected path delay Metric value, and the actual attribute Metric object is used to carry an actual path delay Metric value.

In an embodiment of the present application, the Metric object carried by the first message includes an intended attribute Metric object for carrying an expected path delay Metric value.

The service path establishment method provided by the embodiments of the present application is described below by way of specific examples.

In a possible embodiment of the present application, the first node includes a head node and a tail node; the receiving, by the second node, of a second message that is sent by the first node and carries path computation constraint information includes: receiving, by the second node, a second message that is sent by the head node and carries path computation constraint information, and receiving a second message that is sent by the tail node and carries path computation constraint information.

The second message sent by each of the head node and the tail node carries a first Metric value indicating a forward path delay and a third Metric value indicating a bidirectional path delay difference.

It is worth noting that, in the embodiments of the present application, the path from the head node (the A end) to the tail node (the Z end) is referred to as a forward path, and the path from the tail node (the Z end) to the head node (the A end) is referred to as a reverse path.

The first Metric value carried by the second message sent by the head node (the A end) indicates the delay of the forward path; since the tail node (the Z end) in the forward path is the head node in the reverse path, the first Metric value carried by the second message sent by the tail node may be regarded as the delay of the reverse path.

Here, the third Metric values carried by the second messages sent by the head node and the tail node should be equal.

In an embodiment of the present application, determining the path information according to the path computation constraint information in the second message may include the following steps:
determining at least one candidate forward path according to the first Metric value carried by the second message sent by the head node, that is, the path delay of each computed candidate forward path must be lower than the delay indicated by the first Metric value carried by the second message sent by the head node;
determining at least one candidate reverse path according to the first Metric value carried by the second message sent by the tail node, that is, the path delay of each computed candidate reverse path must be lower than the delay indicated by the first Metric value carried by the second message sent by the tail node;
determining, according to the path delay difference between the candidate forward path and the candidate reverse path, a forward path and a reverse path that satisfy the third Metric value.

Specifically, the path delay of each candidate forward path and the path delay of each candidate reverse path may be obtained, one path is selected from the candidate forward paths and one path is selected from the candidate reverse paths, and if the path delay difference between the selected candidate forward path and the selected candidate reverse path satisfies the constraint of the third Metric value, the selected candidate forward path and candidate reverse path may be respectively taken as the final forward path and reverse path.

### Example 1:

The first node is a PCC, the second node is a PCE, a PCEP session is established between the PCC and the PCE, and Keepalive messages are maintained.

When the PCC initiates the creation of a fine-granularity service to the PCE, for example, creating one 10 Mbps bidirectional fgMTNP fine-granularity service, which requires that the maximum forward path delay be 15 ms, the maximum reverse path delay be 15 ms, and the maximum forward-and-reverse delay difference be 200 us, the PCC initiates a path computation request to the PCE, that is, sends a PCReq message to the PCE, and the PCReq message carries the following objects: an RP object, an END-POINTS object, an LSPA object, a Bandwidth object, a Metric object, an RRO object, an IRO object and a LOAD-BALANCING object.

The B flag in the RP object is set to 1, indicating that the LSP to be created is a bidirectional LSP;
The value of the Bandwidth object indicates that the bandwidth of the LSP to be created is 10 Mbps, and the type of LSP to be created is fgMTNP (including setting the LSP encoding type and the switching type);
Two Metric objects may be provided: the value of the T flag in the first Metric object is X1, and the first Metric object contains Metric Value 1 indicating the forward path delay upper limit and Metric Value 2 indicating the reverse path delay upper limit; the value of the T flag in the second Metric object is X2, and the second Metric object contains Metric Value 3 indicating the bidirectional path delay difference upper limit. Alternatively, only one Metric object may be provided, where the value of the T flag in this Metric object is X3, and this Metric object contains Metric Value 1 indicating the forward path delay upper limit, Metric Value 2 indicating the reverse path delay upper limit, and Metric Value 3 indicating the bidirectional path delay difference upper limit.

After receiving the path computation request, the PCE performs path computation by using the forward path delay upper limit, the reverse path delay upper limit and the bidirectional path delay difference upper limit in the Metric object as routing computation constraint conditions. The routing computation method may adopt the OSPF or OSPF-TE protocol or the like.

In a possible example, the process in which the PCE determines the path information includes: computing the delay introduced on each link traversed by the path, and accumulating the forward delay, the reverse delay and the difference between the forward delay and the reverse delay of each link; when the accumulated forward delay does not exceed the forward delay upper limit, the reverse delay does not exceed the reverse delay upper limit, and the difference between the forward delay and the reverse delay does not exceed the bidirectional delay difference upper limit, the path meets the given delay constraints.

In a possible example, the process in which the PCE determines the path information includes: computing the delay introduced on each link and each node traversed by the path, and accumulating the forward delay, the reverse delay and the difference between the forward delay and the reverse delay of each link and each node; when the accumulated forward delay does not exceed the forward delay upper limit, the reverse delay does not exceed the reverse delay upper limit, and the difference between the forward delay and the reverse delay does not exceed the bidirectional delay difference upper limit, the path meets the given delay constraints.

Illustratively, the delay within a node may include an egress queue delay and a timeslot cross-connect configuration delay. The forward delay, the reverse delay and the difference between the forward and reverse delays of a node may be configured manually, or may be obtained through measurement by a network node. In a network node, a smaller node delay can be obtained by optimizing the timeslot configuration.

When the PCE replies to the PCC, if the path computation is successful, the PCRep message carries the computed path delay Metric values, and the B flag in the Metric object is set to 1, while the C flag is meaningless. In this case, the format of the Metric object in the PCRep message may refer to the three forms described above, but it is required that the types of Metric values carried in the PCReq and the PCRep be the same, and the three returned Metric Values respectively represent the forward delay value, the reverse delay value and the forward-and-reverse delay difference corresponding to the computed path.

When the forward and reverse path delays computed by the PCE cannot satisfy the expected forward delay value, reverse delay value or forward-and-reverse delay difference, an attempt may be made to compensate for part of the delay by adjusting the buffering at the head node and/or the tail node. Specifically, if the forward delay value is relatively small while the reverse delay value is relatively large, the delay of the forward path is increased by increasing the buffering capability in the egress direction at the tail node (the Z end) of the forward path, thereby reducing the forward-and-reverse delay difference; if the forward delay value is relatively large while the reverse delay value is relatively small, the delay of the reverse path is increased by increasing the buffering capability in the egress direction of the reverse path at the head node (the A end) of the forward path, thereby reducing the forward-and-reverse delay difference.

Through the above method, by carrying the forward and reverse delays and the delay difference in the request initiated by the PCC, a route that meets the delay constraints can be computed, which provides a guarantee for some services that require precise control of the LSP delay.

### Example 2

A PCE is to create a bidirectional fgMTNP fine-granularity service with a bandwidth of 10 Mbps, which requires that the maximum forward path delay be 15 ms, the maximum reverse path delay be 15 ms, and the maximum forward-and-reverse path delay difference be 200 us, where the head node is R1 and the tail node is R3. The PCE has established a PCEP session with R1, and R1 is the PCC.

The PCE first takes the head and tail node addresses, the bidirectional link, the bandwidth, the protection attribute and the like in the service requirement as constraint conditions, and, in combination with a TE database, obtains the path computation result R1-R2-R3. Then, the PCE fills in the Stateful PCE Request Parameter (SRP) object, the LSP object, the END-POINTS object, the ERO object, the bidirectional flag and various constraint attribute objects in the LSP creation message (PCInitiate), where the constraint attribute objects may include an intended attribute object, and the intended attribute object carries a Metric object, which is used to indicate that the expected maximum forward delay is 15 ms, the expected maximum reverse delay is 15 ms, and the expected maximum forward-and-reverse delay difference is 200 us. The PCE sends this bidirectional LSP creation message to the PCC (that is, R1), and records the relevant information of this LSP.

After receiving the LSP creation request, R1 may complete the creation of the LSP through RSVP-TE distributed signaling, or may complete the creation of the LSP through SRv6.

After creating the LSP, R1 returns a PCRpt message to the PCE, which contains the SRP object, the LSP object, the RRO object, an intended attribute object, an actual attribute object, and the like. The intended attribute object may contain a Metric object representing an expected delay, and the actual attribute may contain a Metric object representing the actual delay of the currently created LSP.

After receiving the bidirectional LSP report (PCRpt) message, the PCE matches the SRP object and the LSP object therein against the local records, finds the corresponding bidirectional LSP instance, and updates records of the path, state, delegation, metrics and other information. The PCE thus completes the establishment of this bidirectional LSP.

If the service subsequently expects to modify the expected path delay Metric value in the intended attribute object of this bidirectional LSP, this can be achieved by sending an LSP update request message (PCUpdate message) to R1; specifically, the updated expected path delay Metric value may be carried by the Metric object under the intended attribute object.

### Example 3

As a centralized path computation element, the PCECC interacts with a plurality of PCCs. After determining the service configuration, the PCECC may directly configure the service onto the PCCs, and thereby establish a service connection.

Referring to FIG. 7, FIG. 7 is a schematic flowchart of a service path establishment method according to an embodiment of the present application. The PCECC negotiates with the PCC corresponding to the LSP head node through a PCInitiate message to obtain authorization, and carries PLSP-ID = 0 to the PCC through the PCInitiate message, so as to trigger the PCC to return the allocated PLSP-ID (the identifier of the LSP).

The PCC sends a PCRpt message to report the LSP state, indicating that the LSP is going up, and returns the specific PLSP-ID, so that the PCECC obtains the delegation authorization for the corresponding LSP (that is, the D (Delegate) flag bit and the C flag bit in the PCRpt are set to 1).

When the PCECC knows the expected path delay Metric value of the LSP, it may carry the value in the creation request, that is, carry the expected delay Metric value in the PCInitiate message sent to the PCC corresponding to the LSP head node, and the delay Metric value may be located in a sub Metric object under the intended attribute object. In this sub Metric object, in order to support forward and reverse path delay constraints, the embodiments of the present application extend the definition of the Metric object, and extend metric value types such as the forward path delay upper limit, the reverse path delay upper limit and the forward-and-reverse (bidirectional) path delay difference.

If the PCECC does not know the expected path delay Metric value of the LSP, there is no need to carry the path delay Metric object in the creation request.

In the PCInitiate messages sent by the PCECC to the PCCs corresponding to the intermediate nodes and the tail node of the LSP, there is no need to carry the delay Metric value.

The PCRpt message sent by the LSP head node to the PCECC may carry an intended attribute object (<intended-attribute-list>) and an actual attribute object (<actual-attribute-list>).

The PCRpt messages sent by the intermediate nodes and the tail node of the LSP need not carry the intended attribute object or the actual attribute object.

The solution of the embodiments of the present application extends the Metric object under the intended attribute object <Metric-list>, which is used to represent the expected path delay metric value of the entire LSP; in addition, it also extends the Metric object under the actual attribute object (<actual-attribute-list>), and the delay Metric Value filled therein is the actually measured path delay metric value of the entire LSP.

If the service subsequently expects to modify the expected path delay Metric value in the intended attribute object of this bidirectional LSP, the PCECC may send an LSP update request message (PCUpdate message) to the PCC corresponding to the LSP head node, and the PCUpdate message is filled with the intended attribute (<intended-attribute-list>), the <intended-attribute-list> carrying Metric values representing expected path delays, such as the expected forward path delay, the expected reverse path delay and the expected forward-and-reverse path delay difference.

The PCUpdate messages sent by the PCECC to the intermediate nodes and the tail node need not carry the expected path delay Metric value.

### Example 4

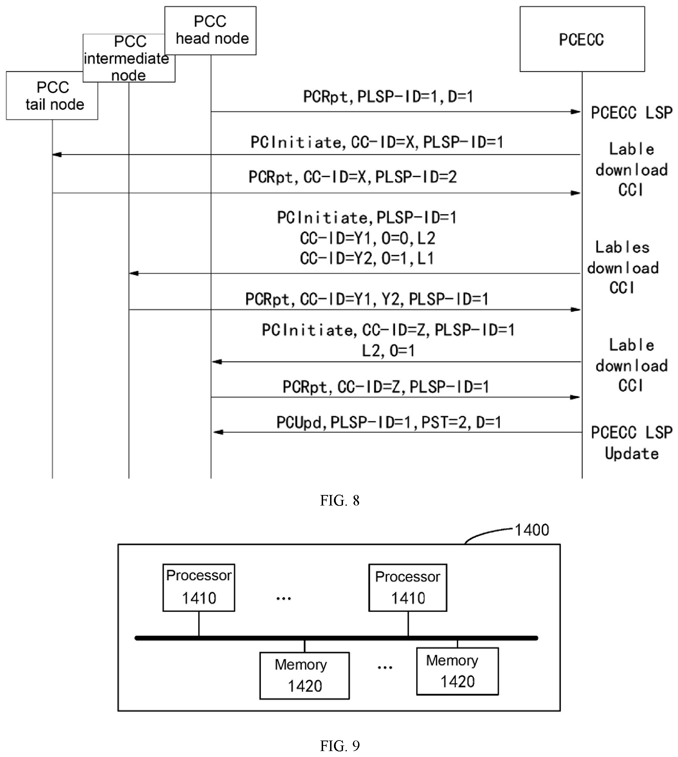

Referring to FIG. 8, FIG. 8 is a schematic flowchart of a service path establishment method according to an embodiment of the present application. The PCC initiates, through a PCRpt message, the interaction for connection creation with the PCECC, so as to implement LSP creation. Specifically, the PCC corresponding to the LSP head node sends a PCRpt message to the PCECC, so as to delegate the LSP to the PCECC. The PCRpt message sent by the PCC carries an intended attribute object (<intended-attribute-list>) and an actual attribute object (<actual-attribute-list>). The Metric object under the intended attribute object <Metric-list> represents the expected path delay metric value of the entire LSP; the Metric object under the actual attribute object (<actual-attribute-list>) represents the actually measured path delay metric value of the entire LSP.

### Example 5

Under the SDN controller architecture, an n-th level controller may directly control transport network devices, may control, through a CPI interface, the resources provided by a lower-layer controller (an (n-1)-th level controller), and may provide connection services for an upper-layer controller (an (n+1)-th level controller) through a CPI interface.

A network device detects a connection request based on a delay constraint from a client (for example, through UNI signaling), and transfers the request to the controller through the CPI interface; the controller performs connection route computation based on the received request and delivers a network configuration to the network device. The connection request here may be a connection request for a service of OTN ODUk granularity, MTNP 5G granularity, fgMTNP 10 Mbps granularity or fgOTN 10 Mbps granularity.

In addition to carrying basic information such as bandwidth, the connection request uploaded by the network device through the CPI interface further carries the forward and reverse path delay upper limits and bidirectional path delay difference information to the controller. The forward path delay upper limit represents the upper limit of the accumulated end-to-end delay of the path from the start point to the end point, the reverse path delay upper limit represents the upper limit of the accumulated end-to-end delay of the path from the end point to the start point, and the bidirectional path delay difference information is the range of the difference between the forward delay and the reverse delay of the path.

After receiving this request, the controller performs path computation based on the bidirectional path delay in a Routing Controller (RC).

The delay introduced on each link traversed by the path is computed, and the forward delay, the reverse delay and the difference between the forward delay and the reverse delay of each link are accumulated; when the accumulated forward delay does not exceed the forward delay upper limit, the reverse delay does not exceed the reverse delay upper limit, and the difference between the forward delay and the reverse delay does not exceed the bidirectional delay difference upper limit, the path meets the given delay constraints.

The delay introduced on each link and each node traversed by the path is computed, and the forward delay, the reverse delay and the difference between the forward delay and the reverse delay of each link and each node are accumulated; when the accumulated forward delay does not exceed the forward delay upper limit, the reverse delay does not exceed the reverse delay upper limit, and the difference between the forward delay and the reverse delay does not exceed the bidirectional delay difference upper limit, the path meets the given delay constraints.

After the controller computes a path that meets the constraint conditions, it configures configuration information onto each node traversed by the path, so as to create a service connection.

### Example 6

An upper-layer controller decomposes the bidirectional delay constraint of an end-to-end connection into one or more lower-layer controllers traversed by the end-to-end connection, and determines the specific bidirectional delay constraint within each lower-layer controller. The connection request here may be a connection request for a service of OTN ODUk granularity, MTNP 5G granularity, fgMTNP 10 Mbps granularity or fgOTN 10 Mbps granularity.

The upper-layer controller carries the forward and reverse delay upper limits and bidirectional delay difference information to the lower-layer controller through a CPI interface. The forward delay upper limit represents the upper limit of the accumulated end-to-end delay of the path from the start point to the end point, the reverse delay upper limit represents the upper limit of the accumulated end-to-end delay of the path from the end point to the start point, and the bidirectional delay difference information is the range of the difference between the forward delay and the reverse delay of the path.

After receiving this request, the lower-layer controller performs path computation based on the bidirectional delay in a Routing Controller (RC).

The delay introduced on each link traversed by the path is computed, and the forward delay, the reverse delay and the difference between the forward delay and the reverse delay of each link are accumulated; when the accumulated forward delay does not exceed the forward delay upper limit, the reverse delay does not exceed the reverse delay upper limit, and the difference between the forward delay and the reverse delay does not exceed the bidirectional delay difference upper limit, the path meets the given delay constraints.

The delay introduced on each link and each node traversed by the path is computed, and the forward delay, the reverse delay and the difference between the forward delay and the reverse delay of each link and each node are accumulated; when the accumulated forward delay does not exceed the forward delay upper limit, the reverse delay does not exceed the reverse delay upper limit, and the difference between the forward delay and the reverse delay does not exceed the bidirectional delay difference upper limit, the path meets the given delay constraints.

After the lower-layer controller computes a connection path that meets the constraints, it returns the connection information to the upper-layer controller, and the upper-layer controller splices the connections from the one or more lower-layer controllers to complete the creation of the end-to-end connection.

### Example 7

The head and tail end nodes respectively compute the forward path and the reverse path, with coordination and bidirectional delay constraint determination. Node A represents the head node, node Z represents the tail node, A->Z is the forward direction, and Z->A is the reverse direction.

The PCE may respectively receive path computation requests initiated by the PCCs corresponding to the head node A and the tail node Z of a bidirectional connection. The request initiated by the PCC corresponding to the head node A carries the forward delay upper limit and the bidirectional delay difference information; the request initiated by the PCC corresponding to the tail node Z carries the reverse delay upper limit and the bidirectional delay difference information. It is worth noting that the reverse delay upper limit here is to be filled into the forward metric value 1 of the Metric object, and the forward delay upper limit may also be carried, the forward delay upper limit being filled into the reverse metric value 2 of the Metric object.

Based on the head and tail nodes of the forward and reverse connections, the PCE respectively computes the forward path and the reverse path. The forward path here refers to the path from the head node of the bidirectional connection to the tail node (that is, A->Z), and the reverse path is the path from the tail node to the head node (that is, Z->A). For the reverse path itself, its head node is the tail node Z of the forward and reverse connections, and its tail node is the head node A of the forward and reverse connections.

The PCE computes one or more forward paths from the head node A to the tail node Z, computes the delay introduced on each link and/or each node traversed by the path, and accumulates the forward delay of each link and/or each node; when the accumulated forward delay does not exceed the forward delay upper limit, the path meets the given forward delay constraint.

The PCE computes one or more reverse paths, that is, from the tail node Z of the bidirectional connection to the head node A, computes the delay introduced on each link and/or each node traversed by the path, and accumulates the reverse delay of each link and/or each node; when the accumulated reverse delay does not exceed the reverse delay upper limit, the reverse path meets the given reverse delay constraint.

Among the one or more computed forward paths and reverse paths, the forward delay of a forward path is compared with the reverse delay of a reverse path; if the difference between the forward delay of the forward path and the reverse delay of the reverse path is within the range of the bidirectional delay difference upper limit, the forward path and the reverse path meet the delay constraints.

After computing paths that meet the forward and reverse delay constraints, the PCE may return the computed paths and the delays of the bidirectional paths to the PCCs corresponding to the head node and the tail node. The message returned by the PCE to a PCC may contain the computed path and the delays of the bidirectional paths.

In the dual-path delay Metric object sent to the PCC corresponding to the head node A, the forward path delay Metric Value 1 is filled in with the path delay from the head node to the tail node computed by the PCE, and the reverse path delay Metric Value 2 is filled in with the path delay from the tail node Z to the head node A computed by the PCE;

In the dual-path delay Metric object sent to the PCC corresponding to the tail node Z, the forward path delay Metric Value 1 is filled in with the path delay from the tail node Z to the head node A computed by the PCE, and the reverse path delay Metric Value 2 is filled in with the path delay from the head node A to the tail node Z computed by the PCE.

Further, the head node and the tail node may perform more precise delay compensation on the path delays based on the received delays of the bidirectional paths; for example, the tail node Z increases the delay of the forward path by increasing the buffering capability in the egress direction, or the head node A increases the delay of the reverse path by increasing the buffering capability in the egress direction of the reverse path, so as to compensate for the bidirectional delay difference through buffering.

The PCE-PCC interaction method and the transferred information in this embodiment are likewise applicable for use between an upper-layer controller and a lower-layer controller.

In the solution of the embodiments of the present application, the first message sent by the second node to the first node carries path information and a Metric object, and the Metric object carries a path delay Metric value, so that the first node can obtain the delay information of the service from the Metric object of the first message and perform service path configuration based on the delay information of the service, thereby ensuring that the created service path can satisfy the delay requirement of the service.

An embodiment of the present application further provides an electronic device. As shown in FIG. 9, the electronic device 1400 includes:
one or more processors 1410;
a memory 1420 storing one or more programs which, when executed by the one or more processors 1410, cause the one or more processors 1410 to perform:
   the service path establishment method applied to a first node;
      or,
   the service path establishment method applied to a second node.

As a non-transitory network system, the memory 1420 may be used to store non-transitory software programs and non-transitory computer-executable programs. In addition, the memory 1420 may include a highspeed random access memory, and may also include a non-transitory memory, for example, at least one magnetic disk storage device, a flash memory device, or another non-transitory solid-state storage device. In some embodiments, the memory 1420 may optionally include memories 1420 remotely arranged with respect to the processor 1410, and these remote memories 1420 may be connected to the processor 1410 through a network. Examples of the above network include, but are not limited to, the Internet, an intranet, a local area network, a mobile communication network and a combination thereof.

The memory 1420 may be implemented in the form of a Read Only Memory (ROM), a static storage device, a dynamic storage device, a Random Access Memory (RAM) or the like. The memory 1420 may store an operating system and other application programs; when the technical solutions provided by the embodiments of this specification are implemented by means of software or firmware, the relevant program code is stored in the memory 1420 and is invoked by the processor 1410 to execute the methods of the embodiments of the present application.

The processor 1410 may be implemented by means of a general-purpose CPU (Central Processing Unit), a microprocessor, an Application Specific Integrated Circuit (ASIC), one or more integrated circuits, or the like, and is used to execute the relevant programs so as to implement the technical solutions provided by the embodiments of the present application.

In some embodiments, the electronic device further includes:
an input/output interface, used to implement information input and output;
a communication interface, used to implement communication interaction between the present device and other devices, where the communication may be implemented in a wired manner (for example, USB, a network cable, etc.), or in a wireless manner (for example, a mobile network, WIFI, Bluetooth, etc.);
a bus, which transfers information among the various components of the device (for example, the processor 1410, the memory 1420, the input/output interface and the communication interface);
where the processor 1410, the memory 1420, the input/output interface and the communication interface may implement a communication connection with one another inside the device through the bus.

An embodiment of the present application further provides a computer-readable storage medium storing computer-executable instructions, where the computer-executable instructions are used to execute and implement:
the service path establishment method applied to a first node;
   or,
the service path establishment method applied to a second node.

An embodiment of the present application further provides a computer program product, including a computer program or computer instructions, where the computer program or the computer instructions are stored in a computer-readable storage medium, a processor of a computer device reads the computer program or the computer instructions from the computer-readable storage medium, and the processor executes the computer program or the computer instructions, so that the computer device executes and implements:
the service path establishment method applied to a first node;
   or,
the service path establishment method applied to a second node.

The system architecture and the application scenarios described in the embodiments of the present application are intended to more clearly illustrate the technical solutions of the embodiments of the present application, and do not constitute a limitation on the technical solutions provided by the embodiments of the present application. Those skilled in the art will appreciate that, with the evolution of system architectures and the emergence of new application scenarios, the technical solutions provided by the embodiments of the present application are likewise applicable to similar technical problems.

Those of ordinary skill in the art may understand that all or part of the processes in the methods of the above embodiments may be implemented by instructing relevant hardware through a computer program, and the computer program may be stored in a non-volatile computer-readable storage medium; when executed, the computer program may include the processes of the embodiments of the above methods. Any reference to a memory, storage, a database or another medium used in the embodiments provided in the present application may include a non-volatile memory and/or a volatile memory. The non-volatile memory may include a read only memory (ROM), a programmable ROM (PROM), an electrically programmable ROM (EPROM), an electrically erasable programmable ROM (EEPROM), or a flash memory. The volatile memory may include a random access memory (RAM) or an external cache memory. By way of illustration and not limitation, RAM is available in various forms, such as static RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), Rambus direct RAM (RDRAM), direct Rambus dynamic RAM (DRDRAM), and Rambus dynamic RAM (RDRAM), and the like.

Those of ordinary skill in the art may understand that all or some of the steps in the methods disclosed above, and the systems, may be implemented as software, firmware, hardware and appropriate combinations thereof. Some physical components or all physical components may be implemented as software executed by a processor, such as a central processing unit, a digital signal processor or a microprocessor, or implemented as hardware, or implemented as an integrated circuit, such as an application specific integrated circuit. Such software may be distributed on a computer-readable medium, and the computer-readable medium may include a computer storage medium (or a non-transitory medium) and a communication medium (or a transitory medium). As is well known to those of ordinary skill in the art, the term computer storage medium includes volatile and non-volatile, removable and non-removable media implemented in any method or technology for storing information (such as computer-readable instructions, data structures, program modules or other data). Computer storage media include, but are not limited to, RAM, ROM, EEPROM, flash memory or other memory technology, CD-ROM, digital versatile disk (DVD) or other optical disk storage, magnetic cassettes, magnetic tapes, magnetic disk storage or other magnetic storage devices, or any other medium that can be used to store desired information and that can be accessed by a computer. In addition, as is well known to those of ordinary skill in the art, a communication medium typically contains computer-readable instructions, data structures, program modules or other data in a modulated data signal such as a carrier wave or another transport mechanism, and may include any information delivery medium.

Some embodiments of the present application have been described above with reference to the accompanying drawings, which are not intended to limit the scope of rights of the present application thereby. Any modification, equivalent replacement and improvement made by those skilled in the art without departing from the scope and essence of the present application shall fall within the scope of rights of the present application.

## Claims

1. A service path establishment method, applied to a first node, the method comprising:
receiving a first message sent by a second node, wherein the first message carries path information and a Metric object, and the Metric object carries a path delay Metric value; and
performing path configuration according to the path information and the path delay Metric value.

2. The method according to claim 1, wherein the path delay Metric value carried by the Metric object comprises at least one of:
a first Metric value, configured to indicate a forward path delay;
a second Metric value, configured to indicate a reverse path delay; or
a third Metric value, configured to indicate a bidirectional path delay difference.

3. The method according to claim 2, wherein the forward path delay represents an accumulated delay of all links traversed by a forward path, or represents an accumulated delay of all links and all nodes traversed by the forward path;
the reverse path delay represents an accumulated delay of all links traversed by a reverse path, or represents an accumulated delay of all links and all nodes traversed by the reverse path; and
the bidirectional path delay difference represents a difference or an absolute difference between the forward path delay and the reverse path delay.

4. The method according to claim 2, wherein the Metric object further comprises a T flag, and the T flag is configured to represent a type of the path delay Metric value carried by the Metric object.

5. The method according to claim 1, wherein before receiving the first message sent by the second node, the method further comprises:
sending, to the second node, a second message carrying path computation constraint information, so that the second node determines the path information according to the path computation constraint information, wherein the path computation constraint information comprises the Metric object;
wherein the second message is a path computation request PCReq message, and the first message is a path computation reply PCRep message.

6. The method according to claim 5, wherein the path computation constraint information further comprises at least one of:
a request parameter RP object, wherein the RP object is configured to carry a first B flag, and the first B flag is configured to indicate whether a path to be computed is bidirectional;
an endpoint END-POINTS object, wherein the END-POINTS object is configured to carry a source address and a destination address of the path to be computed; or
a bandwidth object, wherein the bandwidth object is configured to carry a bandwidth of the path to be computed.

7. The method according to claim 5, wherein the Metric object further carries a second B flag and a C flag, wherein the second B flag represents a bound flag, and the C flag represents a computed metric flag; and
both the second B flag and the C flag in the Metric object carried by the second message are set to 1, so that the first message sent by the second node carries the Metric object.

8. The method according to claim 1, wherein the first message is a path initiation request PCInitiate message, or the first message is a path update request PCUpd message.

9. The method according to claim 5 or 8, wherein the performing path configuration according to the path information and the path delay Metric value comprises:
sending a third message downstream according to the path information, wherein the third message is a Path message; and
receiving a fourth message sent from downstream according to the third message, so as to complete the path configuration according to the fourth message, wherein the fourth message is a resource reservation Resv message.

10. The method according to claim 9, wherein after receiving the fourth message sent from downstream according to the third message, the method further comprises:
sending, to the second node, a fifth message carrying the Metric object, wherein the fifth message is a path state report PCRpt message.

11. The method according to claim 10, wherein the Metric object carried by the fifth message comprises an intended attribute Metric object and an actual attribute Metric object, the intended attribute Metric object is configured to carry an expected path delay Metric value, and the actual attribute Metric object is configured to carry an actual path delay Metric value.

12. The method according to claim 9, wherein the Metric object carried by the first message comprises an intended attribute Metric object configured to carry an expected path delay Metric value.

13. The method according to claim 1, wherein the first node is a path computation client PCC, and the second node is a path computation element PCE;
or, the first node is a PCC, and the second node is a path computation element central controller PCECC;
or, the first node is a network node, and the second node is a software defined network SDN controller;
or, the first node is a first SDN controller, and the second node is a second SDN controller;
or, the first node is a PCE, and the second node is a PCC;
or, the first node is a PCECC, and the second node is a PCC.

14. A service path establishment method, applied to a second node, the method comprising:
sending a first message to a first node, wherein the first message carries path information and a Metric object, and the Metric object carries a path delay Metric value, so that the first node performs path configuration according to the path information and the path delay Metric value.

15. The method according to claim 14, wherein the path delay Metric value carried by the Metric object comprises at least one of:
a first Metric value, configured to indicate a forward path delay;
a second Metric value, configured to indicate a reverse path delay; or
a third Metric value, configured to indicate a bidirectional path delay difference.

16. The method according to claim 15, wherein the forward path delay represents an accumulated delay of all links traversed by a forward path, or represents an accumulated delay of all links and all nodes traversed by the forward path;
the reverse path delay represents an accumulated delay of all links traversed by a reverse path, or represents an accumulated delay of all links and all nodes traversed by the reverse path; and
the bidirectional path delay difference represents a difference or an absolute difference between the forward path delay and the reverse path delay.

17. The method according to claim 15, wherein the Metric object further comprises a T flag, and the T flag is configured to represent a type of the path delay Metric value carried by the Metric object.

18. The method according to claim 14, wherein before sending the first message to the first node, the method further comprises:
receiving a second message that is sent by the first node and carries path computation constraint information, wherein the path computation constraint information comprises the path delay Metric value carried by the Metric object; and
determining the path information according to the path computation constraint information in the second message.

19. The method according to claim 18, wherein the first message is a path computation reply PCRep message, and the second message is a path computation request PCReq message.

20. The method according to claim 18, wherein the path computation constraint information further comprises at least one of:
a request parameter RP object, wherein the RP object carries a first B flag, and the first B flag is configured to indicate whether a path to be computed is bidirectional;
an endpoint END-POINTS object, wherein the END-POINTS object carries a source address and a destination address of the path to be computed; or
a bandwidth object, wherein the bandwidth object carries a bandwidth of the path to be computed.

21. The method according to claim 18, wherein the Metric object further carries a second B flag and a C flag, wherein the second B flag represents a bound flag, and the C flag represents a computed metric flag; and
both the B flag and the C flag in the Metric object carried by the second message are set to 1, so as to indicate that the first message needs to carry the Metric object.

22. The method according to claim 14, wherein the first message is a path initiation request PCInitiate message, or the first message is a path update request PCUpd message.

23. The method according to claim 22, wherein after sending the first message to the first node, the method further comprises:
receiving a fifth message that is sent by the first node and carries the Metric object, wherein the fifth message is a path state report PCRpt message.

24. The method according to claim 23, wherein the Metric object carried by the fifth message comprises an intended attribute Metric object and an actual attribute Metric object, the intended attribute Metric object is configured to carry an expected path delay Metric value, and the actual attribute Metric object is configured to carry an actual path delay Metric value.

25. The method according to claim 14, wherein the Metric object carried by the first message comprises an intended attribute Metric object configured to carry an expected path delay Metric value.

26. The method according to claim 18, wherein the first node comprises a head node and a tail node, and the second message sent by each of the head node and the tail node carries a first Metric value indicating a forward path delay and a third Metric value indicating a bidirectional path delay difference;
the determining the path information according to the path computation constraint information in the second message comprises:
determining at least one candidate forward path according to the first Metric value carried by the second message sent by the head node;
determining at least one candidate reverse path according to the first Metric value carried by the second message sent by the tail node; and
determining, according to a path delay difference between the candidate forward path and the candidate reverse path, a forward path and a reverse path that satisfy the third Metric value.

27. The method according to claim 14, wherein the first node is a path computation client PCC, and the second node is a path computation element PCE;
or, the first node is a PCC, and the second node is a path computation element central controller PCECC;
or, the first node is a network node, and the second node is a software defined network SDN controller;
or, the first node is a first SDN controller, and the second node is a second SDN controller;
or, the first node is a PCE, and the second node is a PCC;
or, the first node is a PCECC, and the second node is a PCC.

28. An electronic device, comprising:
one or more processors; and
a memory storing one or more programs which, when executed by the one or more processors, cause the one or more processors to perform:
the service path establishment method according to any one of claims 1 to 13;
or,
the service path establishment method according to any one of claims 14 to 27.

29. A computer-readable storage medium storing a computer program which, when executed by a processor, causes the processor to perform:
the service path establishment method according to any one of claims 1 to 13;
or,
the service path establishment method according to any one of claims 14 to 27.
